**Europäisches Patentamt**

**European Patent Office**

**Office européen des brevets**

(11) Veröffentlichungsnummer : **0 036 626**
**B1**

(12)

# EUROPÄISCHE PATENTSCHRIFT

(45) Veröffentlichungstag der Patentschrift :
11.05.83

(21) Anmeldenummer : 81102004.9

(22) Anmeldetag : 18.03.81

(51) Int. Cl.³ : **G 02 B 7/26**

(54) Einrichtung zur Verbindung von Lichtleitern.

(30) Priorität : 18.03.80 DE 3010347

(43) Veröffentlichungstag der Anmeldung :
30.09.81 Patentblatt 81/39

(45) Bekanntmachung des Hinweises auf die Patenterteilung : 11.05.83 Patentblatt 83/19

(84) Benannte Vertragsstaaten :
FR GB IT SE

(56) Entgegenhaltungen :
DE A 2 655 114
DE A 2 722 367
DE A 2 900 895
FR A 2 334 969
GB A 1 429 843
GB A 1 541 787
US A 4 078 852
Patents Abstracts of Japan Band 3, Nr. 31,
16. März 1979 Seite 55E98

(73) Patentinhaber : Firma Carl Zeiss

D-7920 Heidenheim (Brenz) (DE)

(72) Erfinder : Muchel, Franz, Dipl.-Phys.
Lortzingstrasse 2
D-7923 Königsbronn (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 036 626

## Einrichtung zur Verbindung von Lichtleitern

Die Erfindung betrifft eine Einrichtung zur Verbindung von Lichtleitern mit Hilfe eines abbildenden optischen Elementes, bei der sich die Stirnflächender Lichtleiter jeweils im Brennpunkt einer ihnen zugeordneten, sammelnden, plankonvexen Linse befinden.

Zur lösbaren Verbindung zweier Lichtleitfasern werden überwiegend Stekker verwendet, durch die die darin eingefaßten Lichtleitfasern nach dem Zusammenfügen mit ihren Stirnflächen in direkten Kontakt kommen. Wegen den besonders bei Monomodefasern nötigen hohen Anforderungen an die Zentriergenauigkeit derartiger Stecker sind diese aufwendig in der Herstellung. Wenn es sich um justierbare Ausführungen handelt, müssen diese beim Umstecken jeweils exakt auf den neuen Gegenstecker abgestimmt werden.

Bei Lichtleiterweichen bzw. -verteilern ergibt sich ein ähnliches Bild. Diese bestehen aus stirnseitig aufeinander oder auf eine Koppelplatte aufgesetzten, fest miteinander verbundenen Lichtleitern oder aus miteinander verschmolzenen Fasern. In solchen Verteilern ist das Koppelverhältnis der einzelnen Fasern weitgehend festgelegt. Es läßt sich nur noch unter sehr hohen Genauigkeitsanforderungen an die verwendete Mechanik beeinflußen wie dies z. B. in der US-PS 38 74 779 beschrieben ist oder bei Verwendung polarisierten Lichtes durch das Anlegen äußerer elektromagnetischer Felder an den Verteiler wie es die DE-OS 28 53 149 lehrt.

Aus dem DE-GM 74 30 490, der DE-OS 19 41 923 und dem US-Patent 41 19 362 sind Lichtleiterkupplungen bekannt, in denen ein bzw. mehrere abbildende optische Elemente verwendet sind. Die dort beschriebenen Lösungen sind jedoch nicht dazu geeignet, die Anforderungen an die Zentriergenauigkeit der zu koppelnen Lichtleiter zu vermindern.

Es ist, beispielsweise aus der GB-A-14 29 843 (Fig. 2) auch bereits bekannt, die zu verbindenen Lichtleiterstecker jeweils mit einer bikonvexen Linse zu versehen, in deren Brennpunkt die Stirnfläche des jeweiligen Lichtleiters angeordnet ist. Durch die Kopplung im aufgeweiteten, parallelen Strahlengang der Steckverbindung sind Zentrierprobleme der beiden Stecker zueinander weitgehend vermieden. Da sphärische Linsen, bei den für kleine Steckerabmessungen geforderten kurzen Brennweiten jedoch nur schlecht an die Abstrahlcharakteristik einer Glasfaser angepaßt werden können und wegen der vielen Glas-Luftgrenzenflächen besitzen derartige Stecker relativ hohe Koppelverluste.

Aus der GB-A-14 29 843 (Fig. 3), der GB-A-15 41 787 sowie der FR-A1-23 34 969 und der DE-A1-26 55 114 ist es bereits bekannt, die Anzahl der Glas-Luft-Grenzflächen in einer Linsen-Steckverbindung zu minimieren, indem die Linsen direkt auf die Stirnflächen der Lichtleiter aufgesetzt sind. Dabei sind die Stirnflächen der Lichtleiter im Brennpunkt der ihnen jeweils zugewandten, einzigen brechenden Fläche des Linsensteckers angeordnet. Diese Anordnung hat zwar Vorteile in Bezug auf die Korrektur von Bildfehlern, die außenliegenden, brechenden Flächen, die in der Regel entspiegelt sind, können jedoch leicht beschädigt werden oder verschmutzen, was längerfristig zu Koppelverlusten führt.

Es ist die Aufgabe der vorliegenden Erfindung, eine Einrichtung zur Verbindung von Lichtleitern zu schaffen, die auch längerfristig geringe Koppelverluste besitzt und keine großen Anforderungen an die Maßhaltigkeit der beweglichen bzw. lösbaren Teile stellt.

Diese Aufgabe wird durch eine Ausbildung gemäß dem kennzeichnenden Teil des Anspruchs 1 gelöst.

Bei dieser Lösung für eine Einrichtung zur Verbindung von Lichtleitern ist die Zahl der Grenzflächen zwischen Medien verschiedener Brechzahlen dadurch minimiert, daß die strahlaufweiteten optischen Elemente sich z. B. mittels Immersionsöl im direkten Kontakt miteinander befinden. Die nötige Brechkraft wird nur von einer, z. B. asphärischen Glas-Luftgrenzfläche aufgebracht, die sich im Inneren des Steckers befindet.

Die Vorteile des Linsensteckerprinzips, nämlich Unempfindlichkeit der Schnittstellen im aufgeweiteten Strahlengang gegenüber Dejustierungen der miteinander gekoppelten Teile, bleiben erhalten. Abstandsfehler zwischen Buchse und Stecker spielen bei parallelem Strahlengang keine Rolle und seitlicher Versatz wirkt sich lediglich um das Verhältnis von Lichtleiterdurchmesser zu Linsendurchmesser reduziert auf die Koppelverluste aus.

Es ist lediglich darauf zu achten, daß die Anlageflächen von Stecker und Buchse parallel mit den optischen Achsen der darin enthaltenen Optik verlaufen. Diese Forderung kann bei der Herstellung der Stecker leicht erfüllt werden. Ein späteres Zentrieren der Stecker zueinander durch den Anwender entfällt.

Für die Linsen sind asphärische brechende Flächen gewählt, um den Öffnungsfehler der beiden im Immersionskontakt aneinanderliegenden, ein bikonvexes Element bildenden Linsen zu minimieren und somit eine ausreichend punktförmige Abbildung der Lichtleiterstirnflächen mit einer an deren Abstrahlcharakteristik angepaßten Apertur zu gewährleisten.

Die erfindungsgemäße Einrichtung ist nicht nur auf Stecker anwendbar, die z. B. zur Verbindung zweier Lichtleiter dienen, sondern umfaßt auch Verteiler (Lichtleiterverzweigung) sowie Schalter und Ventile, in denen das Koppelverhältnis der angeschlossenen Lichtleiter in diskreten Schritten bzw. kontinuierlich verändert werden kann. Diese bestehen aus einem zur Aufnahme der vorstehend beschriebenen Steckverbindungen mit mindestens drei Buchsen versehenen geeigneten Gehäuse, in

dem Strahlteiler oder Spiegel fest oder beweglich angeordnet sind.

Als Strahlteiler eignen sich z. B. teilverspiegelte Prismen oder Planplatten, die das auftreffende Licht wellenlängenunabhängig auf eine entsprechende Anzahl von Ausgängen verteilen. Bildet man die Strahlteiler nach Art von Interferenzfiltern aus, so entsteht ein optischer Demultiplexer, der ein multispektrales Lichtsignal wellenlängenselektiv auf die einzelnen Ausgänge verteilt.

Ebenso wie bei den lösbaren Steckverbindungen ergibt sich auch für Schalter und Ventile eine Reduzierung der Anforderungen an die Toleranzen des bewegten Teils, wenn dieses sich im aufgeweiteten Strahlengang befindet. Die durch das Linsensteckerprinzip erlaubten größeren Toleranzen ermöglichen überhaupt erst die Schaffung von Ventilen und Schaltern für Lichtleiterkabel, mit denen ein problemloser Dauerbetrieb möglich ist.

Bei Schaltern bzw. Verteilern, deren Verbindungen häufig gelöst werden, sind die abbildenden optischen Elemente vorzugsweise wie vorstehend beschrieben in die Stecker selbst integriert. Sind derartige Lichtregler jedoch für feste Lichtleiterverkabelungen vorgesehen, dann erweist es sich als vorteilhaft, die abbildenden optischen Elemente im Schalter anzuordnen und den Lichtleite z. B. über einen konventionellen Zentrierstecker fest mit dem Regler bzw. Schalter zu verbinden. Die Linsen können dann zusammenhängend in einem Stück durch Spritzgießen gefertigt werden, in einer besonders vorteilhaften Ausführungsform direkt als Teil des den beweglichen Strahlteiler enthaltenden Gehäuses.

Anhand der Fig. 1-6 der beigefügten Zeichnungen werden Ausführungsbeispiele der Erfindung näher erläutert :

Figur 1   skizziert eine Steckverbindung ;

Figur 2   skizziert einen Verteiler mit Steckverbindung nach Fig. 1 ;

Figur 3   skizziert einen optischen Schalter ;

Figur 4   skizziert einen zweiten optischen Schalter ;

Figur 5   skizziert den beweglichen Teil des Schalters aus Fig. 6 ;

Figur 6   ist eine Teilskizze der optischen Komponenten eines Steckverbinders.

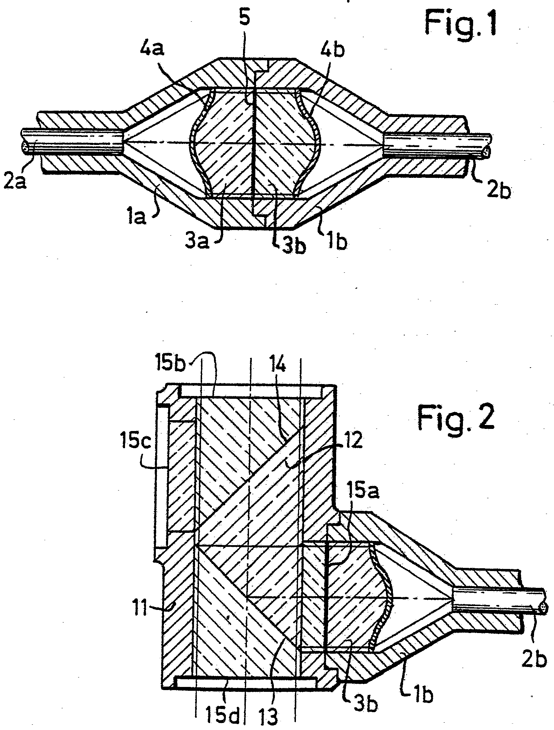

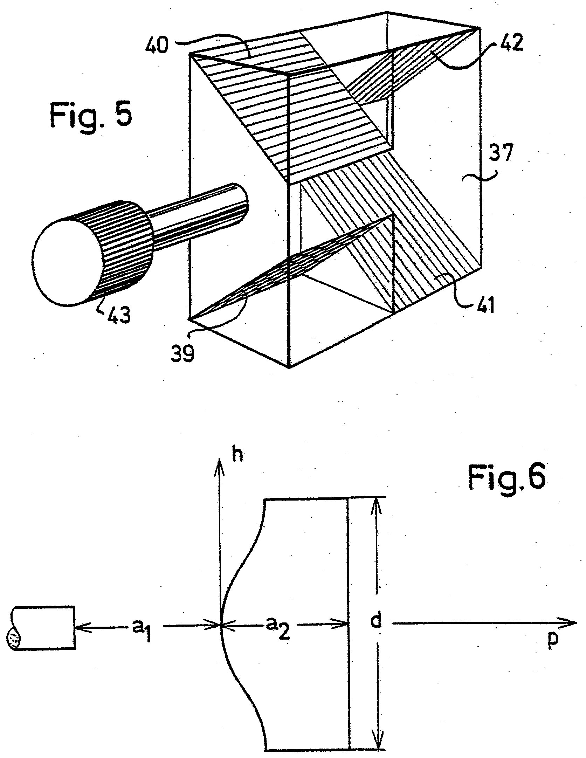

Die in Fig. 1 dargestellte Steckverbindung besteht aus zwei ineinandergreifenden Steckern 1a und 1b, in denen jeweils ein Lichtleiter 2a bzw. 2b und eine Plansphäre 3a bzw. 3b befestigt sind. Beide Stirnflächen der Lichtleiter 2a und 2b sind jeweils im Brennpunkt der Asphären 3a und 3b angeordnet, die auf ihrer dem Lichtleiter zugewandten Seite einen Entspiegelungsbelag 4a bzw. 4b tragen. Zwischen den aneinanderliegenden ebenen Flächen der beiden Asphären 3a und 3b befindet sich eine dünne Schicht 5 aus Immersionsöl, welches den gleichen Brechungsindex wie die Asphären 3 besitzt.

In Fig. 2 ist eine Lichtleiterverzweigung skizziert, die mit dem in Fig. 1 gezeigten Steckersystem kompatibel ist. Der Verteiler besteht aus einem Gehäuse 11, das vier Kupplungen 15a-d besitzt, deren äußere Form dem Stecker 1a in Fig. 1 entspricht. Das Gehäuse 11 enthält mehrere Prismen 12, die mit teilverspiegelten Flächen 13 bzw. 14, die im Winkel von 45° zur optischen Achse des Verteilers angeordnet sind, aneinander grenzen. Die Spiegelfläche 14 besitzt einen Transmissionsfaktor von 0,67 während die Spiegelfläche 13 einen von 0,5 besitzt.

Die Lichtleistung eines an die Buchse 15b angekoppelten Lichtleiters wird somit gleichmäßig auf drei mit Hilfe von Steckern 1b an die Ausgänge 15a, c und d angeschlossene Lichtleiter verteilt, von denen nur einer dargestellt ist. Selbstverständlich kann das Koppelverhältnis durch geeignete Wahl des Transmissionsfaktors der Spiegelflächen 13 und 14 beliebig gewählt werden.

Wie bereits in Fig. 1 skizziert befindet sich zwischen den ebenen Flächen der Asphären 3b und der Oberfläche des Strahlteilers 12 eine dünne Schicht aus Immersionsöl, um Koppelverluste durch Reflexion zu vermeiden.

Die in Fig. 1 und 2 skizzierten Steckverbindungen können vom Benutzer problemlos auch mehrfach umgesteckt werden ohne daß Zentrierprobleme auftreten, da die strahlaufweitenden Elemente 3b bzw. 8 im Stecker selbst angeordnet und somit mit dem Lichtleiter verbunden sind.

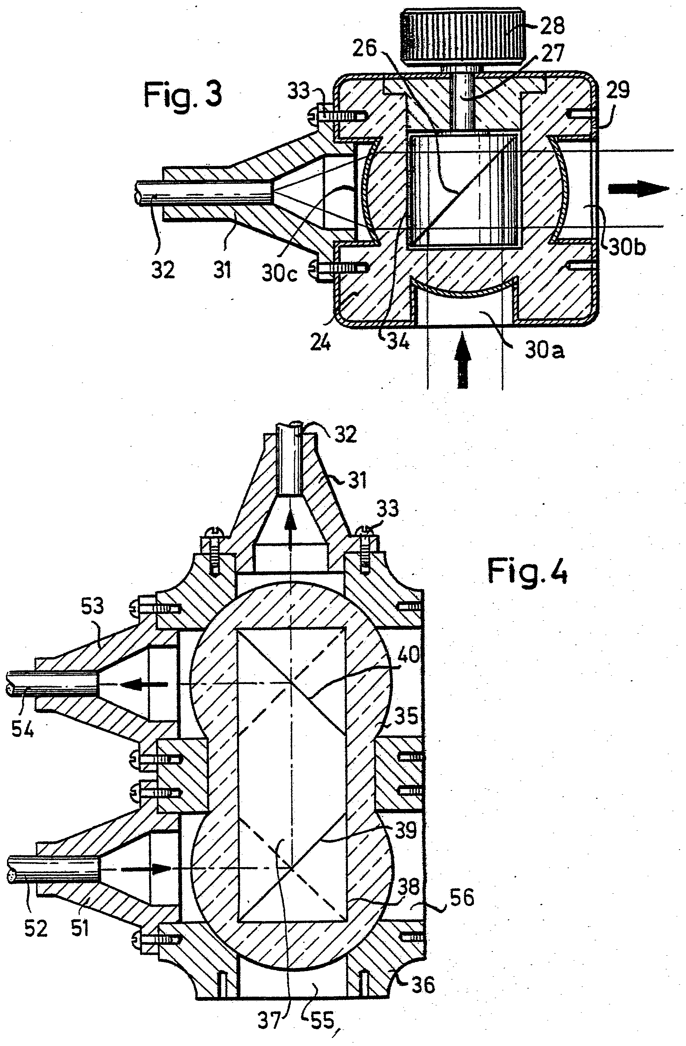

In den Fig. 3-5 sind Schalter für Lichtleiter skizziert, die fest « verdrahtet » sind, d. h. an die mehrere im allgemeinen fest mit dem Schaltergehäuse verbundene Lichtleiter angeschlossen sind. Die Strahlaufweitung erfolgt in diesen Fällen im Schalter und dient zur Reduzierung der Genauigkeitsanforderungen, die an das bewegliche Schaltelement zu stellen sind. Zur Verbindung von Schaltergehäuse und Lichtleiter können handelsübliche Zentrierstecker verwendet werden.

Der in Fig. 3 dargestellte Schalter besitzt ein rechteckiges Gehäuse 24 aus transparentem Material, in dessen zylinderförmigen Innenraum ein mit Hilfe eines Knopfes 28 über eine Welle 27 drehbarer Spiegel 26 angeordnet ist. Der Spiegel 26 verteilt das durch die Aufnahmekupplung 30b einfallende Licht auf vier sternförmig senkrecht zur Drehachse angeordnete Kupplungen, von denen zwei nämlich 30b und c dargestellt sind, wahlweise je nach Schalterstellung.

Das transparente Gehäuse 24 ist im Bereich der Aufnahmekupplungen asphärisch geformt und entspiegelt. Die Tiefe der Aufnahmekupplung ist so gewählt, daß in Verbindung mit den daran zu befestigenden konventionellen Zentriersteckern die Stirnfläche der Lichtleiter wieder im Brennpunkt der jeweiligen Asphäre liegt. Zur Vermeidung von Reflexionen ist der Zwischenraum zwischen dem zylindrischen Spiegelträger 34 und dem Schaltergehäuse mit Immersionsöl gefüllt. Die Schalteroberfläche 29 ist zum Schutz gegen Fremdlicht opal belegt. Der gesamte Schalter besteht somit einschließlich der Abbildungsoptik aus einem durch Spritzgießen kostengünstig herstellbaren Kunststoffteil.

In Fig. 4 ist ein Schalter dargestellt, dessen Gehäuse 36 sechs in der Zeichenebene angeordnete Aufnahmekupplungen für Zentrierstecker 31 besitzt, die den Lichtleiter 32 mittels Schrauben 33 fest mit dem Gehäuse 36 verbinden. Im Inneren des Gehäuses 33 befindet sich ein transparenter Kranz 35 aus sechs Asphären, die den Aufnahmekupplungen jeweils gegenüber liegen. Der Kranz 35 ist rechteckig durchbrochen und nimmt einen ebenfalls transparenten Schieber 37 (Fig. 5) auf, der mehrere Spiegel bzw. Strahlteiler 39-42 enthält.

Befindet sich der Schieber in der Fig. 4 gezeigten Stellung, so wird das über den Stecker 51 eingespeiste Licht über den Vollspiegel 39 und den Strahlteiler 40 auf die Lichtleiter 32 und 54 verteilt. Beim Herausziehen des Schiebers 37 mittels der Handhabe 43 treten die Strahlteiler 41 und 42 in den Strahlengang ein, wodurch z. B. das über den Stecker 51 eingespeiste Licht auf die Ausgänge 55 und 56 verteilt wird. Verwendet man geeignet kombinierte, wellenlängenselektive Strahlteiler, so lassen sich auf diese Weise schaltbare Demultiplexer (Kanalwähler) realisieren. Auch hier befindet sich zwischen dem Schieber 37 und dem Asphärenkranz 35 Immersionsöl und die Oberflächen der Asphären sind entspiegelt.

Verwendet man statt der Spiegelschicht einen Strahlteiler, dessen Transmissionsfaktor sich in Bewegungsrichtung des Schiebers kontinuierlich ändert, so erhält man ein optisches Ventil mit stufenloser Variationsmöglichkeit des Koppelverhältnisses.

Die Schalter nach Fig. 3 und 4 bzw. 5 sind nach der in Fig. 1 und 2 bereits beschriebenen Anordnung unter Verwendung von Asphären aufgebaut. Für diese Anordnung hat es sich als zweckmäßig erwiesen, die abbildenden Asphären aus Kunststoff mit einer Brechzahl $n_d$ = 1,49 und einer Abbezahl $v$ = 56 zu spritzen und die geometrischen Daten gemäß folgender Tabelle einzuhalten :

Abstand Lichtleiter Linsenscheitel $a_1$ = 30
Dicke der Asphäre $a_2$ = 8,0
Durchmesser der Asphäre d = 18
Scheitelradius der Asphäre r = 15

Die Form der asphärischen Oberfläche genügt folgender Gleichung :

$$p = h^2/2r - 4{,}6 \times 10^{-5} h^4 + 1{,}3 \times 10^{-7} h^6 - 3{,}8 \times 10^{-10} h^8 + 7{,}7 \times 10^{-13} h^{10}$$

wobei p für die Pfeilhöhe und h für die Höhe gemäß der Darstellung in Fig. 9 steht. Mit der vorstehend beschriebenen Anordnung wird eine sehr gute Anpassung an die Abstrahlcharakteristik von Lichtleitern im Sinne einer Minimierung der Koppelverluste erreicht.

**Ansprüche**

1. Einrichtung zur Verbindung von Lichtleitern mit Hilfe eines abbildenden optischen Elementes, bei der sich die Stirnflächen der Lichtleiter (2) jeweils im Brennpunkt einer ihnen zugeordneten, sammelnden, plankonvexen Linse (3) befinden, dadurch gekennzeichnet, daß die dem Lichtleiter (2) zugewandte Seite (4) der Linse (3) asphärisch geformt ist und deren kupplungsseitige Fläche (5) plan ausgebildet ist und sich im Immersionskontakt mit dem zu verbindenden Teil (2, 12) befindet.

2. Einrichtung nach Anspruch 1, dadurch gekennzeichnet, daß die asphärische Fläche der Linse (3) folgender Gleichung genügt :

$$p = h^2/2r - 4{,}6 \times 10^{-5} h^4 + 1{,}3 \times 10^{-7} h^6 - 3{,}8 \times 10^{-10} h^8 + 7{,}7 \times 10^{-13} h^{10}$$

und die Werte gemäß nachstehender Tabelle eingehalten sind :

Scheitelradius der Asphäre r = 15
Dicke der Asphäre $a_2$ = 8
Abstand Lichtleiter-Linsenscheitel $a_1$ = 30
Brechzahl $n_d$ = 1,49

3. Einrichtung nach Anspruch 1, gekennzeichnet durch zwei ineinandergreifende Stecker (1a, 1b), in denen jeweils ein Lichtleiterende und eine Linse (3) so befestigt sind, daß sich die Planflächen (5) der beiden Linsen (3) im Immersionskontakt berühren.

4. Einrichtung nach Anspruch 3, dadurch gekennzeichnet, daß zum Aufbau eines Verteilers ein mit mindestens drei Aufnahmekupplungen (15) versehenes Gehäuse (11) vorgesehen ist, in dem Strahlteiler (12) angeordnet sind, und die Lichteintritts- bzw. austrittsöffnungen der Aufnahmekupplungen (15, 23) jeweils mit kupplungsseitig ebenen Fenstern abgeschlossen sind, deren Durchmesser dem der Linsen (3) der Stecker (1) entspricht.

5. Einrichtung nach Anspruch 4, dadurch gekennzeichnet, daß die Fenster durch die ebenen Oberflächen eines Strahlteilerprismas (12) gebildet sind.

6. Einrichtung nach Anspruch 1, dadurch gekennzeichnet, daß zum Aufbau eines Verteilers ein mit

mindestens drei Aufnahmekupplungen (30) für Lichtleiter (32) versehenes Gehäuse (24) vorgesehen ist, und daß die Lichteintritts- bzw. austrittsfenster der Aufnahmekupplungen (30) jeweils durch Asphären gebildet sind, deren dem Lichtleiter (32) abgewandten Flächen (34) sich im Immersionskontakt mit einem beweglich gelagerten Strahlteiler (34) befinden.

7. Einrichtung nach Anspruch 6, dadurch gekennzeichnet, daß jeweils mehrere der asphärischen Fenster (35) der Aufnahmekupplungen (55, 56) zusammenhängend aus einem Stück gefertigt sind.

8. Einrichtung nach Anspruch 6, dadurch gekennzeichnet, daß das Gehäuse (24) samt Aufnahmekupplungen (30) und Fenstern aus einem durch Spritzgießen hergestellten, zusammenhängenden Körper aus transparentem Material besteht, dessen Oberfläche (29) bis auf den Fensterbereich opak belegt ist.

9. Einrichtung nach Anspruch 6, dadurch gekennzeichnet, daß der Strahlteiler (34) zwischen festen Raststellungen drehbar gelagert ist und mit einer außerhalb des Verteilergehäuses (24) angeordneten Handhabe (28) gekoppelt ist.

10. Einrichtung nach Anspruch 6, dadurch gekennzeichnet, daß der Strahlteiler (37) zwischen festen Raststellungen verschiebbar ist und mit einer außerhalb des Verteilergehäuses angeordneten Handhabe (43) gekoppelt ist.

11. Einrichtung nach Anspruch 1, dadurch gekennzeichnet, daß mindestens eine Seite der Linsen (3) entspiegelt ist.

12. Einrichtung nach Anspruch 4-6, dadurch gekennzeichnet, daß ein wellenlängen-selektiver Strahlteiler verwendet ist.

13. Einrichtung nach einem der Ansprüche 1-12, dadurch gekennzeichnet, daß die Linsen (3) aus Kunststoff bestehen.

## Claims

1. A device for connecting light guides by means of an imaging optical element with the end surfaces of the light guides (2) being located at the focal point of a converging planoconvex lens (3) associated with them, characterized by the fact that the side (4) of the lens (3) facing the light guide (2) is aspherically shaped while its coupling-side surface (5) is formed flat and is in immersion contact with the part (2, 12) to be connected.

2. A device according to claim 1, characterized by the fact that the aspheric side of the lens (3) satisfies the equation

$$p = h^2/2r - 4.6 \times 10^{-5} h^4 + 1.3 \times 10^{-7} h^6 - 3.8 \times 10^{-10} h^8 + 7.7 \times 10^{-13} h^{10}$$

and the values set forth in the following table are maintained:

| | |
|---|---|
| vertex radius of the asphere r | = 15 |
| thickness of the asphere $a_2$ | = 8 |
| distance between light guide and lens vertex $a_1$ | = 30 |
| refractive index $n_d$ | = 1,49 |

3. A device according to claim 1, characterized by two inter-engaging plugs (1a, 1b) in each of which a light-guide end and lens (3) are fastened in such a manner that the flat surfaces (5) of the two lenses (3) are in immersion contact with each other.

4. A device according to claim 3, characterized by the fact that for mounting a distributor for light guides a housing (11) is provided with at least three receiving couplings (15), in which housing beam splitters (12) are arranged and the light inlet and outlet openings of the receiving couplings (15) are each closed-off by flat windows on the coupling side the diameter of which corresponds to the diameter of the lenses (3) of the plugs (1).

5. A device according to claim 4, characterized by the fact that the windows are formed by the flat surfaces of a beam-splitter prism (12).

6. A device according to claim 1, characterized by the fact that for mounting a distributor for light guides a housing (24) is provided with at least three receiving couplings (30) for light guides (32), and that the light inlet and outlet windows of the receiving couplings (30) are each formed by aspheres the surfaces (34) of which facing away from the light guide (32) are located in immersion contact with a movably mounted beam splitter (25).

7. A distributor according to claim 6, characterized by the fact that a plurality of the aspherical windows (35) of the receiving couplings (55, 56) are made integral in a single piece.

8. A device according to claim 6, characterized by the fact that the housing (24) together with receiving couplings (30) and windows consists of a single body of transparent material produced by injection molding, the surface (29) of which body is provided with an opaque coating except for the window region.

9. A device according to claim 6, characterized by the fact that the beam splitter (34) is turnably mounted between fixed detent positions and is coupled with a handle (28) which is arranged outside of the distributor housing (24).

10. A device according to claim 6, characterized by the fact that the beam splitter (37) is displaceable between fixed detent positions and is coupled with a handle (43) which is arranged outside the distributor housing.

11. A device according to claim 1, characterized by the fact that at least one side of the lenses (3) is provided with an anti-reflection coating.

12. A device according to claims 4 to 6, characterized by the fact that a wavelength-selective beam splitter is used.

13. A device according to any of claims 1 to 12, characterized by the fact that the lenses (3) consists of plastic.


## Revendications

1. Dispositif pour le raccordement de fibres optiques à l'aide d'un élément optique formant une image, dans lequel les surfaces frontales des fibres optiques (2) se trouvent toutes au foyer d'une lentille plan convexe (3), convergente, affectée à chacune d'elles, caractérisé en ce que le côté (4), dirigé vers la fibre optique (2), de la lentille (3) a une forme asphérique, sa surface côté accouplement (5) étant plane et se trouvant en contact par immersion avec la partie (3, 12) à raccorder.

2. Dispositif selon la revendication 1, caractérisé en ce que le dioptre asphérique de la lentille (3) répond à l'équation suivante :

$$p = h^2/2r - 4,6 \times 10^{-5}\, h^4 + 1,3 \times 10^{-7}\, h^6 - 3,8 \times 10^{-10}\, h^8 + 7,7 \times 10^{-13}\, h^{10}$$

les valeurs numériques étant celles du tableau ci-dessous :
rayon du dioptre asphérique au sommet $r = 15$
épaisseur de la lentille asphérique $a_2 = 8$
distance fibre optique-sommet de la lentille $a_1 = 30$
indice de réfraction $n_d = 1,49$

3. Dispositif selon la revendication 1, caractérisé en ce qu'il possède deux connecteurs (1a, 1b) pénétrant l'un dans l'autre, dans chacun desquels sont fixées une extrémité de la fibre optique et une lentille (3), de telle sorte que les surfaces planes (5) des deux lentilles (3) soient en contact par immersion.

4. Dispositif selon la revendication 3, caractérisé en ce qu'il est prévu pour la constitution d'un répartiteur un boîtier (11), garni d'au moins trois accouplements (15), boîtier dans lequel se trouvent les diviseurs de faisceau (12), et en ce que les orifices d'entrée et de sortie de lumière des accouplements (15) sont obturés chacun par des fenêtres planes côté accouplement, dont le diamètre correspond à celui des lentilles (3) du connecteur (1).

5. Dispositif selon la revendication 4, caractérisé en ce que les fenêtres sont formées par les surfaces planes d'un prisme diviseur de faisceau (12).

6. Dispositif selon la revendication 1, caractérisé en ce qu'il est prévu pour la construction d'un répartiteur un boîtier (24) garni d'au moins trois accouplements (30) pour fibre optique (32), et en ce que les fenêtres d'entrée et de sortie de lumière des accouplements (30) sont chacune formées par des lentilles asphériques, dont les surfaces (34) opposées à la fibre optique (32) sont en contact par immersion avec un diviseur de faisceau (34) disposé d'une manière mobile.

7. Dispositif selon la revendication 6, caractérisé en ce que plusieurs des fenêtres asphériques (35) des accouplements (55, 56) sont fabriquées ensemble en une seule pièce.

8. Dispositif selon la revendication 6, caractérisé en ce que le boîtier (24), ensemble avec les accouplements (30) et les fenêtres, se compose d'un corps continu, fabriqué par moulage par injection, en un matériau transparent et dont la surface (29) possède un revêtement opaque jusqu'à la zone des fenêtres.

9. Dispositif selon la revendication 6, caractérisé en ce que le répartiteur de faisceau (34) est disposé de façon à pouvoir tourner entre des positions de crantage fixes, et qu'il est couplé à une poignée (28) disposée à l'extérieur du boîtier du répartiteur (24).

10. Dispositif selon la revendication 6, caractérisé en ce que le répartiteur de faisceau (37) peut coulisser entre des positions de crantage fixes et qu'il est couplé à une poignée (43) disposée à l'extérieur du boîtier du répartiteur.

11. Dispositif selon la revendication 1, caractérisé en ce qu'au moins un côté des lentilles (3) présente un revêtement antiréfléchissant.

12. Dispositif selon l'une quelconque des revendications 4 à 6, caractérisé en ce que l'on utilise un répartiteur de faisceau à sélectivité de longueur d'onde.

13. Dispositif selon l'une quelconque des revendications 1 à 12, caractérisé en ce que les lentilles (3) sont en matière plastique.

# Fig.1

# Fig.2

Fig. 5

40 42 37 39 41 43

Fig.6

$h$

$a_1$ $a_2$ $d$ $p$

Fig. 3

Fig. 4